(19) Europäisches Patentamt
European Patent Office
Office européen des brevets

(11) **EP 2 711 132 B1**

(12) **EUROPÄISCHE PATENTSCHRIFT**

(45) Veröffentlichungstag und Bekanntmachung des Hinweises auf die Patenterteilung:
**20.01.2016 Patentblatt 2016/03**

(51) Int Cl.:
***G01B 5/10*** *(2006.01)* ***G01B 5/20*** *(2006.01)*
***G01B 5/08*** *(2006.01)*

(21) Anmeldenummer: **13004469.6**

(22) Anmeldetag: **13.09.2013**

(54) **Messvorrichtung**

Measuring device

Dispositif de mesure

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2012 DE 102012018580**

(43) Veröffentlichungstag der Anmeldung:
**26.03.2014 Patentblatt 2014/13**

(73) Patentinhaber: **JENOPTIK Industrial Metrology Germany GmbH**
**78056 Villingen-Schwenningen (DE)**

(72) Erfinder: **Seewig, Jörg, Dr.**
**30539 Hannover (DE)**

(74) Vertreter: **Wagner, Carsten**
**Wagner Dr. Herrguth**
**Patentanwälte**
**Burckhardtstrasse 1**
**30163 Hannover (DE)**

(56) Entgegenhaltungen:
**EP-A2- 0 322 120    WO-A1-01/66305**

**Beschreibung**

Die Erfindung betrifft eine Messvorrichtung der im Oberbegriff des Anspruchs 1 genannten Art zur Inprozess-Messung an Prüflingen während eines Bearbeitungsvorganges an einer Bearbeitungsmaschine, insbesondere einer Schleifmaschine.

Bei der Herstellung von Kurbelwellen ist es erforderlich, die Kurbelzapfen der Kurbelwelle auf einer Schleifmaschine auf Maß zu schleifen. Um sicherzustellen, dass der Schleifvorgang beendet wird, sobald ein gewünschtes Maß erreicht ist, ist es erforderlich, den Kurbelzapfen im Rahmen eines Inprozess-Messverfahrens während des Bearbeitungsvorganges fortlaufend zu prüfen, insbesondere hinsichtlich seines Durchmessers und seiner Rundheit. EP-A-0859689 offenbart eine entsprechende Messvorrichtung. Eine ähnliche Messvorrichtung ist auch durch DE 4412682 A1 bekannt.

Durch EP-A-1370391 ist eine Messvorrichtung bekannt, die zur Inprozess-Messung von Kurbelzapfen während eines Schleifvorganges an einer Schleifmaschine dient. Die bekannte Messvorrichtung weist einen Messkopf auf, der über ein Gestänge um eine erste Schwenkachse schwenkbar mit einem Grundkörper der Messvorrichtung verbunden ist. Die bekannte Messvorrichtung weist ferner Mittel zum Ein- und Ausschwenken des Messkopfes in eine Meßposition bzw. aus der Meßposition auf. Zur Durchführung einer InProzess-Messung an einem Kurbelzapfen wird der Messkopf durch die dafür vorgesehenen Mittel in eine Meßposition eingeschwenkt, in der der Messkopf, beispielsweise mittels eines Meßprismas, an dem zu vermessenden Kurbelzapfen zur Anlage gelangt. Während des Schleifvorganges führt der Kurbelzapfen eine Orbitaldrehung um die Drehachse der Kurbelwelle aus. Hierbei bleibt die Schleifscheibe in Kontakt mit dem Kurbelzapfen und ist hierzu radial zur Drehachse der Kurbelwelle beweglich gelagert. Um sicherzustellen, dass während des gesamten Schleifvorganges Messungen an den Kurbelzapfen ausgeführt werden können, vollzieht der Messkopf die Bewegungen des Kurbelzapfens nach. Hierzu ist der Grundkörper der Messvorrichtung mit einem Grundkörper der Schleifmaschine verbunden, so dass die Messvorrichtung während des Schleifvorganges in Radialrichtung der Kurbelwelle synchron mit der Schleifscheibe der Schleifmaschine bewegt wird. Ähnliche Messvorrichtungen sind auch durch DE 10 2009 042 252 A1 und DE 2010 013 069 A1 bekannt.

Durch DE 10205512 A1 ist eine Messeinrichtung für Maschinen zum Bearbeiten von Werkstücken, insbesondere von Kurbelwellen oder Nockenwellen bekannt.

Durch DE 69521921 T2 (entsprechend EP-B-0665481) sind eine Vorrichtung und ein Verfahren zur Inprozessmessung während eines Bearbeitungsvorganges an einer Bearbeitungsmaschine bekannt.

Durch EP-A-0322120 sind eine Vorrichtung und ein Verfahren zur berührungslosen Vermessung zylindrischer Werkstücke bekannt.

Durch EP 1 263 547 B1 ist eine Messvorrichtung zur Inprozess-Messung an Prüflingen während eines Bearbeitungsvorganges an einer Bearbeitungsmaschine bekannt, die einen Grundkörper und einen Messkopf aufweist, der zwischen einer Ruheposition und einer Messposition bewegbar ist und mit dem Grundkörper über ein Gestänge verbunden ist, das derart ausgebildet und eingerichtet ist, dass der Messkopf in Messposition Orbitaldrehungen des Prüflings um eine Drehachse folgt, wobei der Messkopf einen entlang einer linearen Achse auslenkbaren Messtaster zur Aufnahme von Messwerten während eines Messvorganges aufweist. Die aus der Druckschrift bekannte Messvorrichtung weist ferner eine Steuerungseinrichtung zur Steuerung des Messvorganges auf, wobei die Messvorrichtung zur Durchmesser- und Rundheitsmessung von Kurbelzapfen einer Kurbelwelle während eines Bearbeitungsvorganges an einer Schleifmaschine vorgesehen ist.

Durch DE 60101792 T2 (entsprechend EP 1278613 B1 und WO 01/66305), die die Grundlage für die Oberbegriffe der Ansprüche 1 und 7 bildet, ist eine Messvorrichtung der betreffenden Art zur Inprozess-Messung an Prüflingen während eines Bearbeitungsvorganges an einer Bearbeitungsmaschine bekannt, die einen Grundkörper und einen Messkopf aufweist, der zwischen einer Ruheposition und einer Messposition bewegbar ist und mit dem Grundkörper über ein Gestänge verbunden ist, das derart ausgebildet und eingerichtet ist, dass der Messkopf in Messposition Orbitaldrehungen des Prüflings um eine Drehachse folgt. Der Messkopf weist einen entlang einer linearen Achse auslenkbaren Messtaster zur Aufnahme von Messwerten während des Messvorganges und eine Steuerungseinrichtung zur Steuerung des Messvorganges auf, wobei die Messvorrichtung in einem Kalibrierungsmodus kalibrierbar ist.

Der Erfindung liegt die Aufgabe zugrunde, eine Messvorrichtung der im Oberbegriff des Anspruchs 1 genannten Art anzugeben, die hinsichtlich ihrer Messgenauigkeit und Zuverlässigkeit verbessert ist.

Diese Aufgabe wird durch die im Anspruch 1 angegebene Erfindung gelöst.

Bei der bekannten Messvorrichtung werden während einer Relativdrehung des Prüflings, beispielsweise Kurbelzapfens, relativ zu dem Messkopf Messwerte aufgenommen, anhand derer die Bauteilkontur rechnerisch rekonstruiert wird. Die Rekonstruktion kann mittels eines Iterationsverfahrens erfolgen, wie es aus der DE 2009 032 353 A1 bekannt ist. Die Rekonstruktion kann jedoch auch auf der Basis einer Fourier-Analyse erfolgen, wie dies aus der EP 1 263 547 B1 bekannt ist. Unabhängig von dem jeweils angewendeten Rekonstruktionsverfahren gehen die geometrischen Verhältnisse der Messvorrichtung, beispielsweise und insbesondere hinsichtlich der Form eines Messprismas des Messkopfes und der Anordnung des Messkopfes relativ zu dem Prüfling, in die Rekonstruktion ein. Bei der bekannten Messvorrichtung bzw. den bekannten Verfahren zum Betreiben einer solchen Messvorrichtung werden die geometrischen Verhältnisse der Messvorrichtung mit der Genauigkeit der verwendeten Bauteiltoleranzen als gegeben angesehen.

Der Erfindung liegt die Erkenntnis zugrunde, dass sich Abweichungen der tatsächlichen geometrischen Verhältnisse von den angenommenen geometrischen Verhältnissen empfindlich auf die Messgenauigkeit der Messvorrichtung auswirken. Hiervon ausgehend liegt der Erfindung der Gedanke zugrunde, derartige Abweichungen der geometrischen Verhältnisse, die sich aus Bauteiltoleranzen sowie einem Verschleiß der Bauteile der Messvorrichtung ergeben können, bei der Auswertung bzw. Rekonstruktion zu berücksichtigen.

Hierzu sieht die Erfindung vor, dass die Steuerungseinrichtung derart ausgebildet und eingerichtet ist, dass die Messvorrichtung in einem Kalibrierungsmodus kalibrierbar ist. Erfindungsgemäß werden also die geometrischen Verhältnisse der Messvorrichtung nicht mehr als gegeben angesehen, sondern es werden die tatsächlichen geometrischen Verhältnisse durch Kalibrierung der Messvorrichtung bei der Auswertung bzw. Rekonstruktion der Bauteilkontur berücksichtigt. Da Abweichungen der angenommenen geometrischen Verhältnisse von den tatsächlichen geometrischen Verhältnissen die Messgenauigkeit empfindlich beeinflussen und zu Messfehlern führen, ist erfindungsgemäß die Messgenauigkeit der erfindungsgemäßen Messvorrichtung erhöht.

Bei der erfindungsgemäß vorgenommenen Kalibrierung werden nicht nur durch Bauteiltoleranzen hervorgerufene Abweichungen von der gewünschten Geometrie der Messvorrichtung berücksichtigt, sondern auch Abweichungen, die sich durch Verschleiß ergeben. Dies ist insbesondere deshalb von großer Bedeutung, weil bei derartigen Messvorrichtungen beispielsweise ein Messprisma des Messkopfes bei der Bewegung aus der Ruheposition in die Messposition mit erheblichen Kräften auf den Prüfling aufsetzt, so dass ein Verschleiß vorprogrammiert ist. Auch Abweichungen von der gewünschten Geometrie, die sich aus einer durch Verschleiß geänderten Kinematik des den Messkopf mit dem Grundkörper verbindenden Gestänges ergeben, werden über die erfindungsgemäße Kalibrierung erfasst und können damit die Messgenauigkeit nicht mehr beeinträchtigen. Die Kalibrierung kann erfindungsgemäß in vorbestimmten zeitlichen Abständen oder nach der Vermessung einer vorbestimmten Anzahl von Prüflingen vorgenommen werden. Es ist erfindungsgemäß jedoch auch möglich, die Kalibrierung lediglich im Bedarfsfalle oder vor bzw. nach jedem Messvorgang vorzunehmen.

Die Erfindung sieht vor, dass der Messkopf ein Messprisma mit einem Öffnungswinkel $\alpha$ (erster Winkel) und einer Symmetrieachse aufweist, dass die Ausrichtung der linearen Achse des Messtasters relativ zur Symmetrieachse des Messprismas durch einen zweiten Winkel $\beta$ gegeben ist und dass die Kalibrierung hinsichtlich des ersten Winkels $\alpha$ und/oder des zweiten Winkels $\beta$ erfolgt. Durch Kalibrierung der Messvorrichtung hinsichtlich des ersten Winkels und/oder des zweiten Winkels ist das Risiko von Messungenauigkeiten, die durch Abweichungen der angenommenen geometrischen Verhältnisse von den tatsächlichen geometrischen Verhältnissen der Messvorrichtung verursacht sind, verringert, weil sich Bauteiltoleranzen wie auch durch Verschleiß verursachte geometrische Abweichungen über eine Kalibrierung hinsichtlich des ersten Winkels und des zweiten Winkels erfassen lassen. Steht eine verschleißbedingte Änderung des Öffnungswinkels des Prismas im Vordergrund, so kann es erfindungsgemäß ausreichend sein, eine Kalibrierung ausschließlich hinsichtlich des ersten Winkels $\alpha$ vorzunehmen. Steht demgegenüber eine durch Bauteiltoleranzen oder Abnutzung verursachte Änderung der Kinematik des den Messkopf mit dem Grundkörper verbindenden Gestänges im Vordergrund, so kann erfindungsgemäß eine Kalibrierung hinsichtlich des Winkels $\beta$ ausreichend sein. Idealerweise erfolgt die Kalibrierung jedoch hinsichtlich des ersten Winkels $\alpha$ und des zweiten Winkels $\beta$.

Eine vorteilhafte Weiterbildung der Erfindung sieht vor, dass die Steuerungseinrichtung für eine Umschaltung der Messvorrichtung zwischen einem Messmodus, in dem ein Messvorgang ausführbar ist, und einem Kalibrierungsmodus, in dem ein Kalibrierungsvorgang ausführbar ist, ausgebildet und eingerichtet ist. Die Umschaltung zwischen dem Messmodus und dem Kalibrierungsmodus kann hierbei halbautomatisch, beispielsweise durch eine Bedienperson ausgelöst, oder vollautomatisch erfolgen, beispielsweise vor der Bearbeitung eines Prüflings.

Eine andere vorteilhafte Weiterbildung der Erfindung sieht vor, dass die Steuerungseinrichtung einen Speicher aufweist, in dem während eines Kalibrierungsvorganges gewonnene Kalibrierungsdaten speicherbar sind, wobei der Speicher mit einer Auswertungseinrichtung in Datenübertragungsverbindung steht oder bringbar ist zur Berücksichtigung der Kalibrierungsdaten bei der Auswertung von während eines Messvorganges gewonnenen Messdaten. Bei diesen Ausführungsformen werden die bei der Kalibrierung gewonnenen Kalibrierungsdaten in einem Speicher abgelegt, so dass sie bei der Auswertung der Messung und der damit verbundenen Rekonstruktion der Bauteilkontur, insbesondere hinsichtlich Durchmesser und Rundheit, herangezogen werden können.

Eine andere vorteilhafte Weiterbildung der Erfindung sieht vor, dass die Kalibrierung unter Verwendung eines Rundheitsnormales erfolgt.

Hierbei kann das Rundheitsnormal erfindungsgemäß so modifiziert werden, dass eine Kalibrierung insbesondere hinsichtlich des ersten Winkels $\alpha$ und des zweiten Winkels $\beta$ ausgeführt werden kann. Hierzu sieht eine vorteilhafte Weiterbildung der Erfindung vor, dass die Kalibrierung unter Verwendung eines Zylinders erfolgt, der in Umfangsrichtung an wenigstens einer Stelle eine Abflachung mit vorgegebener Ausdehnung aufweist.

Eine besonders einfache Kalibrierung ergibt sich dann, wenn die Kalibrierung unter Verwendung eines Flicknormales erfolgt, wie dies eine andere vorteilhafte Weiterbildung der Erfindung vorsieht. Ein Flicknormal besteht aus einem (hinsichtlich seiner Kreiskontur möglichst idealen) Zylinder, der an einer Umfangsstelle eine Abflachung mit einer vorgegebenen Ausdehnung aufweist.

Ein erfindungsgemäßes Verfahren zum Betreiben einer zur Inprozess-Messung an Prüflingen während eines Bearbeitungsvorganges an einer Bearbeitungsmaschine, insbesondere einer Schleifmaschine, vorgesehenen Messvorrichtung ist im Anspruch 7 angegeben. Bei dem erfindungsgemäßen Verfahren ergeben sich sinngemäß die gleichen Vorteile, wie bei der erfindungsgemäßen Messvorrichtung. Entsprechendes gilt auch für die in den Ansprüchen 8 bis 12 angegebenen vorteilhaften und zweckmäßigen Weiterbildungen des erfindungsgemäßen Verfahrens. Das erfindungsgemäße Verfahren dient insbesondere zum Betreiben einer Messvorrichtung nach einem der Ansprüche 1 bis 6.

Die Erfindung wird nachfolgend anhand der beigefügten, stark schematisierten Zeichnung näher erläutert, in der ein Ausführungsbeispiel einer erfindungsgemäßen Messvorrichtung dargestellt ist.

Es zeigt:

Fig. 1      in stark schematisierter Darstellung eine Seitenansicht eines Ausführungsbeispieles einer erfindungsgemäßen Messvorrichtung in einer Ruheposition des Messkopfes,

Fig. 2A bis 2E      die Messvorrichtung gemäß Fig. 1 in verschiedenen kinematischen Phasen,

Fig. 3      in gleicher Darstellung wie Fig. 1 das Ausführungsbeispiel gemäß Fig. 1 während der Bewegung des Messkopfes in die Meßposition,

Fig. 4      eine blockschaltbildartige Darstellung von Bestandteilen der Messvorrichtung gemäß Fig. 1,

Fig. 5      eine Ansicht eines Messprismas der Messvorrichtung gemäß Fig. 1 eines Messprismas der Messvorrichtung gemäß Fig. 1 in Kombination mit einem Flicknormal zur Verdeutlichung der geometrischen Verhältnisse und

Fig. 6      den Verlauf der Abstandsfunktion bei der Kalibrierung der Messvorrichtung gemäß Fig. 1 unter Verwendung eines Flicknormals.

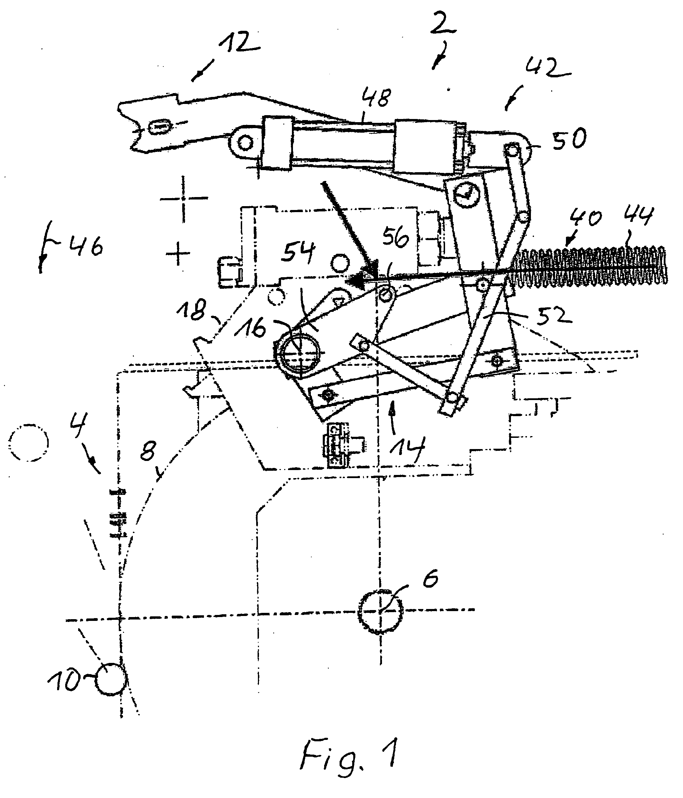

Fig. 1 zeigt ein Ausführungsbeispiel einer erfindungsgemäßen Messvorrichtung 2, die zur Inprozess-Messung an Prüflingen während eines Bearbeitungsvorganges an einer Schleifmaschine 4 dient. Die Schleifmaschine 4, die aus Gründen der Vereinfachung lediglich teilweise dargestellt ist, weist eine um eine maschinenfeste Drehachse 6 drehbare Schleifscheibe 8 auf, die zum Bearbeiten eines Prüflings dient, der bei diesem Ausführungsbeispiel durch einen Kurbelzapfen 10 einer Kurbelwelle gebildet ist.

Die Messvorrichtung 2 weist einen Messkopf 12 auf, der über ein Gestänge 14 um eine erste Schwenkachse 16 schwenkbar mit einem Grundkörper 18 der Messvorrichtung 2 verbunden ist.

Die Messvorrichtung 2 weist ferner Mittel zum Ein- und Ausschwenken des Messkopfes 12 in eine Meßposition bzw. aus der Meßposition auf, die weiter unten näher erläutert werden.

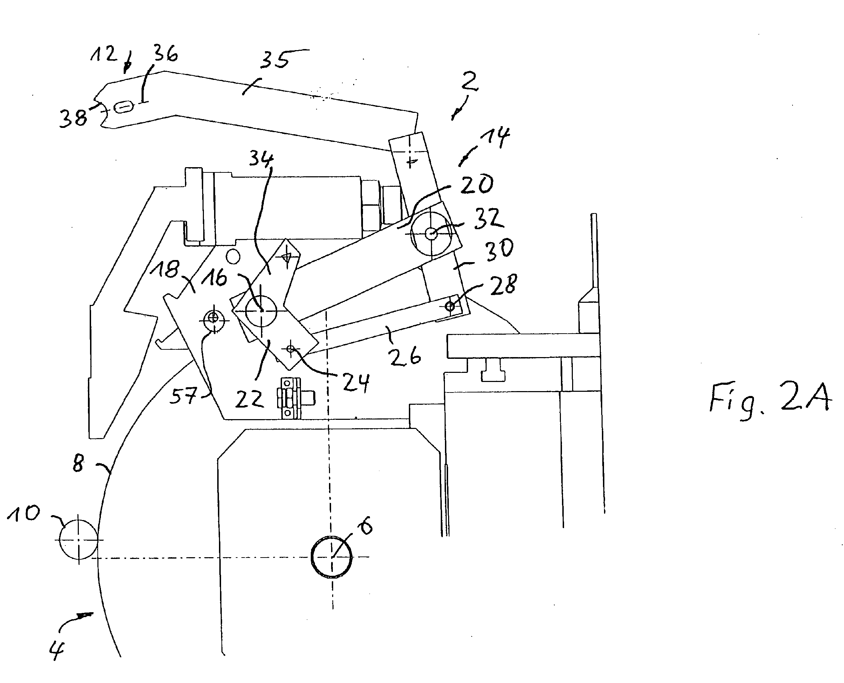

Zunächst wird anhand von Fig. 2A der Aufbau des Gestänges 14 näher erläutert. In den Fig. 2A-2E sind aus Gründen der Übersichtlichkeit die Mittel zum Ein- und Ausschwenken des Messkopfes 12 in die Meßposition bzw. aus der Meßposition weggelassen. Das Gestänge 14 weist ein erstes Gestängeelement 20 und ein zweites Gestängeelement 22 auf, die um die erste Schwenkachse 16 schwenkbar angeordnet sind. Mit dem der ersten Schwenkachse 16 abgewandten Ende des zweiten Gestängeelementes 22 ist um eine zweite Schwenkachse 24 schwenkbar ein drittes Gestängeelement 26 verbunden, mit dessen der zweiten Schwenkachse 24 abgewandtem Ende um eine dritte Schwenkachse 28 schwenkbar ein viertes Gestängeelement verbunden ist, das entfernt von der dritten Schwenkachse 28 um eine vierte Schwenkachse schwenkbar mit dem ersten Gestängeelement 20 verbunden ist.

Bei dem dargestellten Ausführungsbeispiel sind das erste Gestängeelement 20 und das dritte Gestängeelement 26 zueinander nichtparallel angeordnet, wobei der Abstand zwischen der ersten Schwenkachse 16 und der zweiten Schwenkachse 24 kleiner ist als der Abstand zwischen der dritten Schwenkachse 28 und der vierten Schwenkachse 32.

Bei dem dargestellten Ausführungsbeispiel weist das zweite Gestängeelement 22 einen Hebelarm 34 auf, derart, dass der Hebelarm 34 zusammen mit dem Gestängeelement 22 einen zweiarmigen Winkelhebel bildet, dessen Funktion weiter unten näher erläutert wird.

Der Messkopf 12 ist bei diesem Ausführungsbeispiel an einem Haltearm 35 angeordnet, der mit dem vierten Gestängeelement 30, das über die vierte Schwenkachse 32 hinausgehend verlängert ist, verbunden ist. Bei dem dargestellten Ausführungsbeispiel ist die Verbindung zwischen dem Haltearm 34 und dem vierten Gestängeelement 30 starr ausgeführt. Wie aus Fig. 2A ersichtlich ist, ist bei dem dargestellten Ausführungsbeispiel ein den Messkopf 12 haltendes freies Ende des Haltearmes 34 zu der ersten Schwenkachse 16 hin abgewinkelt, wobei ein mit dem vierten Gestängeelement 30 verbundener Teil des Haltearmes 34 mit dem vierten Gestängeelement 30 einen Winkel von größer 90° bildet.

Bei dem dargestellten Ausführungsbeispiel weist der Messkopf 12 einen entlang einer linearen Achse linear auslenkbaren Meßtaster 36 auf, der in Fig. 2A durch eine gestrichelte Linie angedeutet ist. Der Messkopf 12 weist bei dem dargestellten Ausführungsbeispiel ferner ein Meßprisma 38 auf. Die Art und Weise, wie mittels einer Anordnung aus einem linear auslenkbaren Meßtaster 36 und einem Meßprisma 38 Rundheits- und/oder Dimensionsmessungen an einem Prüfling, insbesondere einem Kurbelzapfen einer Kurbelwelle oder einem anderen zylindrischen Bauteil ausgeführt werden, ist dem Fachmann allgemein bekannt und wird daher hier nicht näher erläutert.

Die Messvorrichtung 2 weist ferner Mittel zum Bewegen des Messkopfes 12 aus einer Ruheposition in die Meßposition auf, die bei diesem Ausführungsbeispiel Mittel zum Ein- und Ausschwenken des Messkopfes 12 aufweisen, die an dem Gestänge 14 angreifen und anhand von Fig. 1 näher erläutert werden. Bei dem dargestellten Ausführungsbeispiel weisen die Mittel zum Ein- und Ausschwenken des Messkopfes 12 eine Einschwenkvorrichtung 40 und eine separate Ausschwenkvorrichtung 42 auf.

Bei dem dargestellten Ausführungsbeispiel weist die Einschwenkvorrichtung 40 Federmittel auf, die bei diesem Ausführungsbeispiel eine als Druckfeder ausgebildete Feder 44 aufweisen, die den Messkopf 12 über das Gestänge 14 in einer in Fig. 1 durch einen Pfeil 46 symbolisierten Einschwenkrichtung beaufschlagt. Die Feder 44 ist bei diesem Ausführungsbeispiel als Druckfeder ausgebildet und stützt sich an ihrem einen Ende an dem Grundkörper 18 der Messvorrichtung 2 und an ihrem anderen Ende an dem Hebelarm 34 ab, so dass die Feder 44 den Hebelarm 34 in Fig. 1 entgegen dem Uhrzeigersinn und damit den Messkopf 12 mittels des Gestänges 14 in der Einschwenkrichtung 46 beaufschlagt und zu bewegen sucht.

Die Ausschwenkvorrichtung 42 weist bei diesem Ausführungsbeispiel einen Hydraulikzylinder 48 auf, dessen Kolben an seinem freien Ende mit dem Grundkörper 18 der Messvorrichtung 2 verbunden ist. Mit der Kolbenstange 50 des Hydraulikzylinders 48 ist eine bei diesem Ausführungsbeispiel als Kniehebel ausgebildete Hebelanordnung 42 verbunden, dessen der Kolbenstange 50 abgewandtes freies Ende zu der ersten Schwenkachse 16 exzentrisch mit einem einarmigen Hebel 54 verbunden ist, der zu der Schwenkachse 16 koaxial gelagert ist. Der Hebel 54 weist an seinem freien Ende einen in die Zeichenebene hinein verlaufenden Zapfen 56 auf, der das erste Gestängeelement 20 lose beaufschlagt, so dass der Hebel 54 bei einer Bewegung in einer Ausschwenkrichtung, die in der Zeichnung einer Bewegung im Uhrzeigersinn entspricht, als Mitnehmer für das erste Gestängeelement 20 fungiert.

Zum Abfühlen der jeweiligen Position des Messkopfes 12 sind Sensormittel vorgesehen, die mit Steuerungsmitteln zur Steuerung der Einschwenkvorrichtung 40 und der Ausschwenkvorrichtung 42 in Wirkungsverbindung stehen.

Die Auswertung von Meßwerten, die mittels des Meßtasters 36 während eines Messvorganges aufgenommen werden, erfolgt mittels einer Auswertungseinrichtung. Die Art und Weise, wie entsprechende Meßwerte ausgewertet werden, ist dem Fachmann allgemein bekannt und wird daher hier nicht näher erläutert.

Die Funktionsweise der erfindungsgemäßen Messvorrichtung 2 ist in einem Messmodus wie folgt:

In der in Fig. 1 und Fig. 2A dargestellten Ruheposition befindet sich der Messkopf 12 außer Eingriff von dem Kurbelzapfen 10. In dieser Ruheposition ist der Hydraulikzylinder 48 stillgesetzt, so dass eine Bewegung des Hebelarmes 34 in Fig. 1 entgegen dem Uhrzeigersinn, die die Druckfeder 44 zu bewirken sucht, blockiert ist.

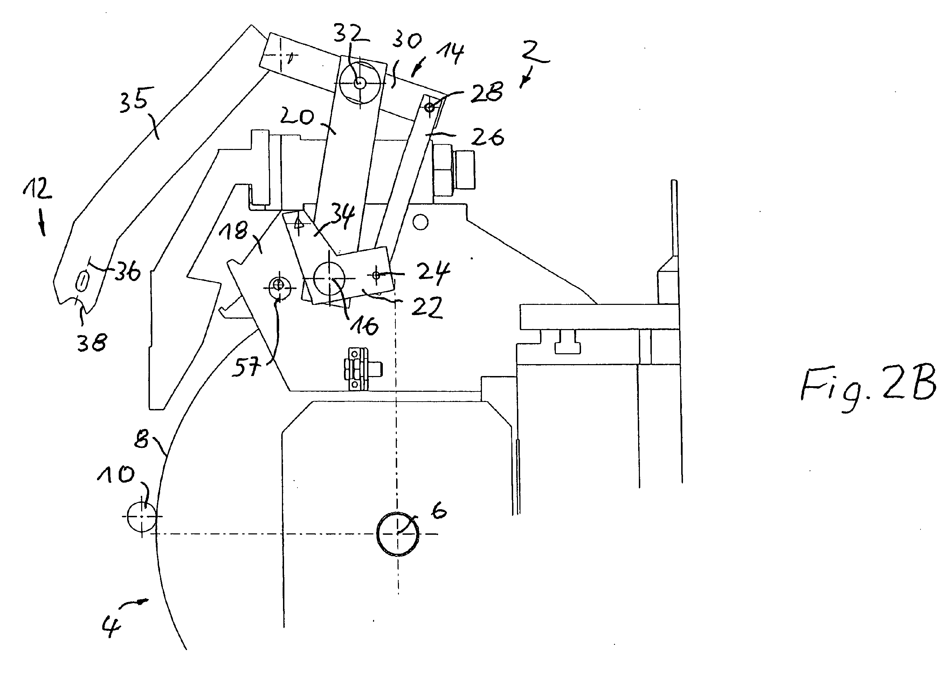

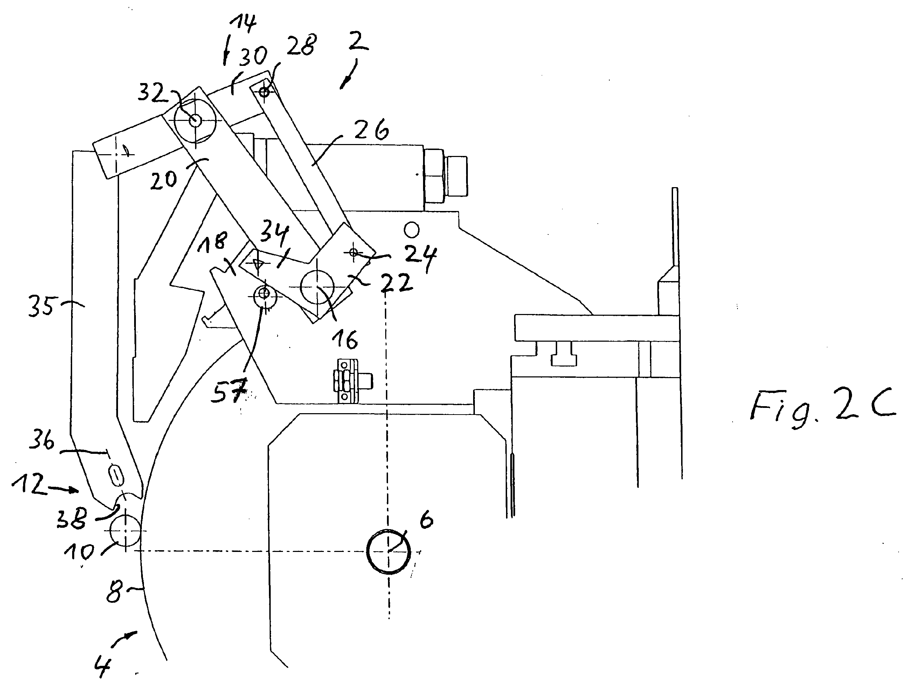

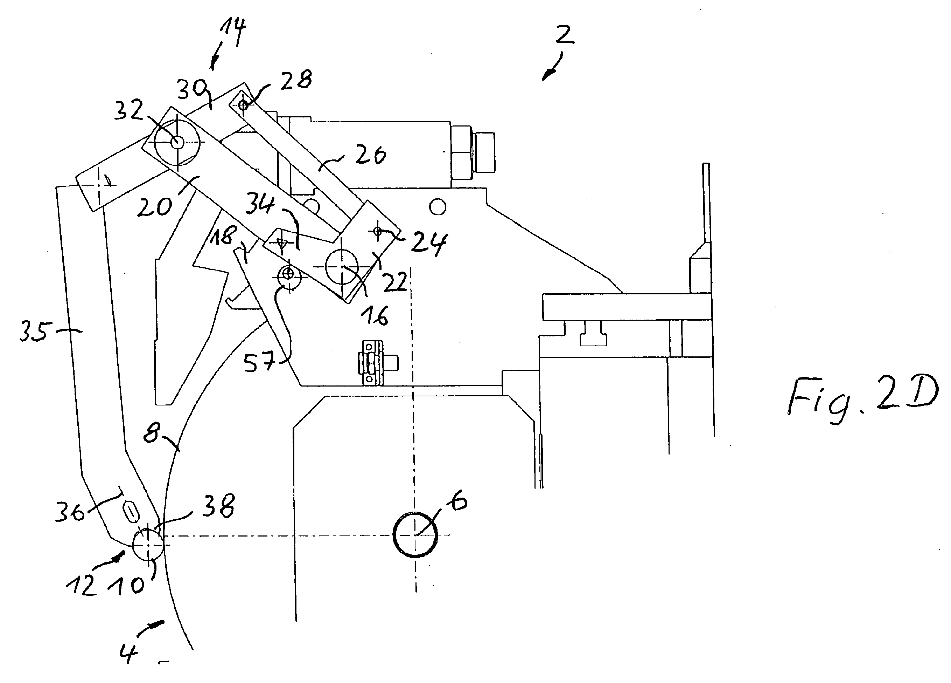

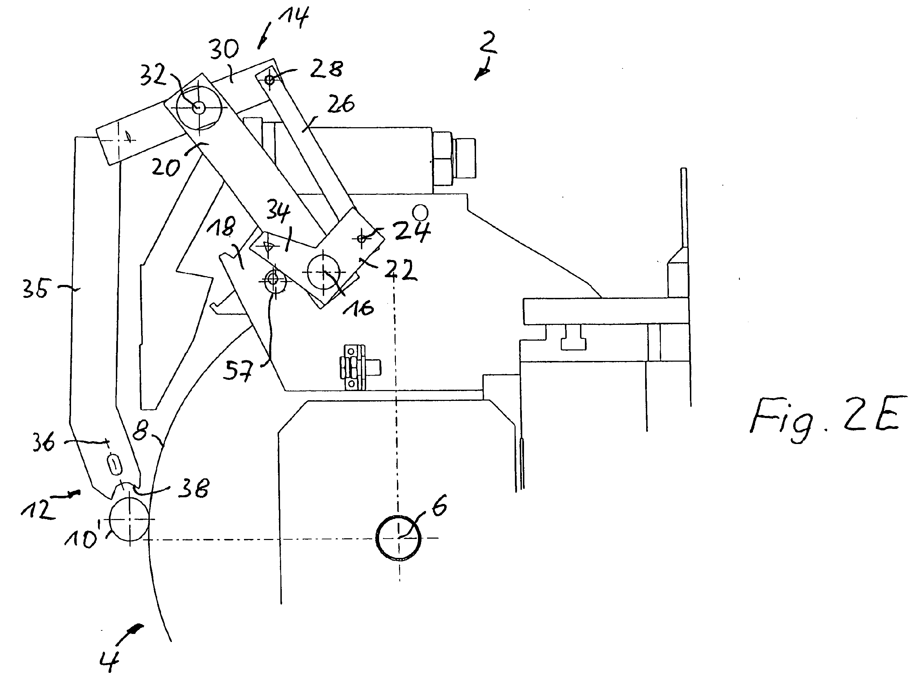

Zum Einschwenken des Messkopfes 12 in der Einschwenkrichtung 46 wird der Hydraulikzylinder 48 derart betätigt, dass seine Kolbenstange 50 in Fig. 1 nach rechts ausfährt. Beim Ausfahren der Kolbenstange 50 drückt die Feder 44 gegen den Hebelarm 34, so dass der Hebelarm 34 in Fig. 2 entgegen dem Uhrzeigersinn verschwenkt wird. Da der Hebelarm 34 drehfest mit dem zweiten Gestängeelement 22 verbunden ist, wird hierbei das zweite Gestängeelement 22 und damit das gesamte Gestänge 14 in Fig. 2 entgegen dem Uhrzeigersinn verschwenkt.

Fig. 2B zeigt den Messkopf 12 in einer Position zwischen der Ruheposition und der Meßposition.

Beim Erreichen einer vorgegebenen, in Fig. 2C dargestellten Winkellage läuft der Hebelarm 34 auf einen Anschlag 57, wobei beim Auflaufen des Hebelarmes 34 auf den Anschlag 57 ein Steuerungssignal an die Steuermittel übermittelt wird, aufgrund dessen der Hydraulikzylinder 48 stillgesetzt wird. Fig. 2C zeigt den Messkopf 12 in einer Suchposition, in der er sich noch nicht in Kontakt mit dem Kurbelzapfen 10 befindet.

Fig. 2D zeigt den Messkopf 12 in seiner Meßposition, in der er sich in Kontakt mit dem Kurbelzapfen 10 befindet.

Fig. 2E entspricht Fig. 2C, wobei der Messkopf 12 in seiner Suchposition im Bezug auf einen Kurbelzapfen 10' größeren Durchmessers dargestellt ist.

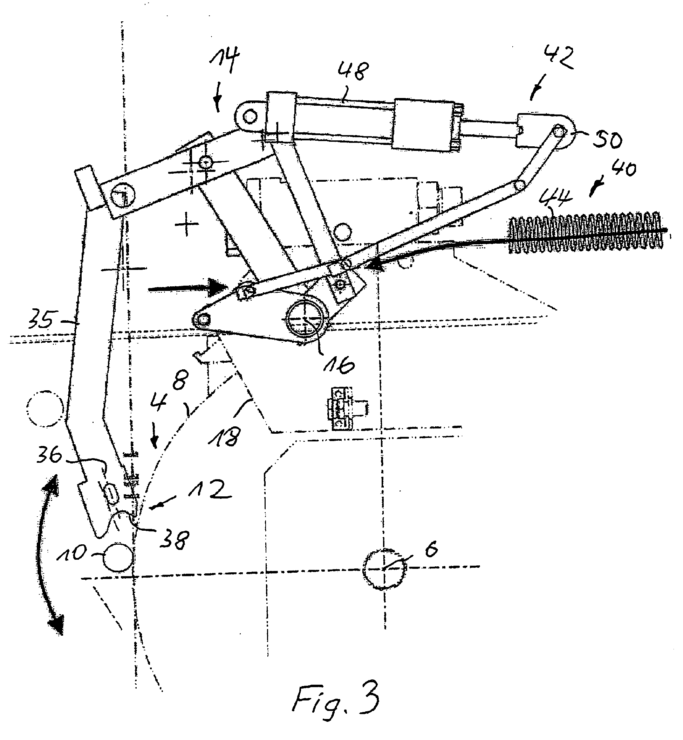

Fig. 3 zeigt die Messvorrichtung 2 in der Suchposition des Messkopfes 12, die auch in Fig. 2C dargestellt ist. Wie sich aus einem Vergleich von Fig. 1 mit Fig. 3 ergibt, wird der Hebel 54 mittels der Hebelanordnung 42 beim Ausfahren der Kolbenstange 50 des Hydraulikzylinders 48 in Fig. 1 entgegen dem Uhrzeigersinn verschwenkt, bis die in Fig. 3 dargestellte Winkellage des Hebels 54 erreicht ist. Wie aus Fig. 3 ersichtlich ist, ist in dieser Winkellage der Zapfen 56 in Umfangsrichtung der ersten Drehachse 16 zu dem ersten Gestängeelement 20 beabstandet, so dass sich das erste Gestängeelement 20 und damit das gesamte Gestänge 14 unter der Wirkung der Gewichtskraft des Messkopfes 12 einschließlich Haltearm 34 und der von der Feder 44 ausgeübten Druckkraft frei bewegen kann. In der Meßposition (vgl. Fig. 2D) liegt der Messkopf 12 an dem Kurbelzapfen 10 an, wobei der Messkopf Orbitaldrehungen des Kurbelzapfens 10 um die Kurbelwelle während des Schleifvorganges nachvollzieht. Hierzu ist der Grundkörper 18 der Messvorrichtung 2 verschiebefest mit einer Halterung der Schleifscheibe 8 verbunden, so dass die Messvorrichtung 2 translatorische Bewegungen der Schleifscheibe 8 in Radialrichtung der Drehachse 6 nachvollzieht.

Während des Kontaktes des Messkopfes 12 mit dem Kurbelzapfen 10 nimmt der Meßtaster 36 Meßwerte auf, anhand derer in der dem Meßtaster 36 nachgeordneten Auswertungsrechner die Rundheit und/oder der Durchmesser des Kurbelzapfens beurteilt werden können. Ist beispielsweise ein bestimmtes Maß des Durchmessers erreicht, so wird die Schleifscheibe 8 außer Eingriff von dem Kurbelzapfen 10 gebracht.

Um den Messkopf 12 nach Beendigung der Messung entgegen der Einschwenkrichtung 46 auszuschwenken, steuert die Steuerungseinrichtung den Hydraulikzylinder 48 derart an, dass sich seine Kolbenstange 50 in Fig. 3 nach links bewegt. Hierbei wird der Hebel 54 mittels der Hebelanordnung 42 in Fig. 3 im Uhrzeigersinn verschwenkt. Solange die Rolle 56 in Umfangsrichtung der ersten Schwenkachse 16 zu dem ersten Gestängeelement 20 beabstandet ist, bleibt der Messkopf 12 zunächst in der Meßposition. Gelangt die Rolle 56 bei einem weiteren Verschwenken des Hebels 54 in Fig. 3 im Uhrzeigersinn um die Schwenkachse 16 an dem ersten Gestängeelement 20 zur Anlage, so fungiert der Hebel 54 bei einem weiteren Verschwenken im Uhrzeigersinn als Mitnehmer und nimmt das erste Gestängeelement 20 und damit das gesamte Gestänge 14 im Uhrzeigersinn mit, so dass der Messkopf entgegen der Einschwenkrichtung 46 ausgeschwenkt wird, bis die in Fig. 1 dargestellte Ruheposition erreicht ist.

Während des Messvorganges bewegt sich der Messkopf in Umfangsrichtung des Kurbelzapfens 10 mit einem Winkelhub, der bei dem dargestellten Ausführungsbeispiel etwa -7° und +5°, also insgesamt 12° beträgt.

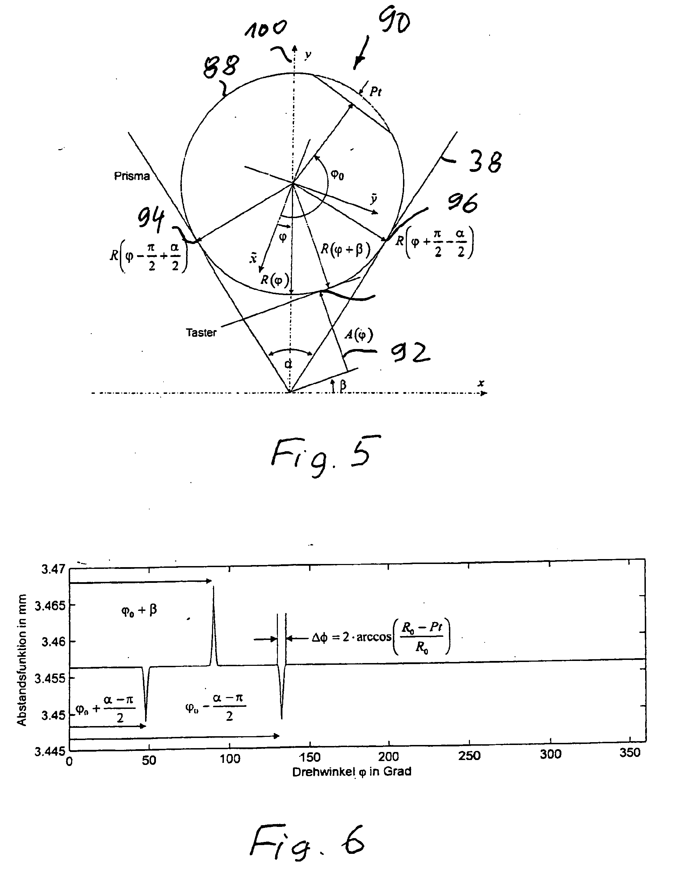

Nachfolgend wird anhand der Figuren 5 näher erläutert, wie eine erfindungsgemäße Messvorrichtung in einem Kalibrierungsmodus mittels eines erfindungsgemäßen Verfahrens betrieben und dadurch kalibriert wird.

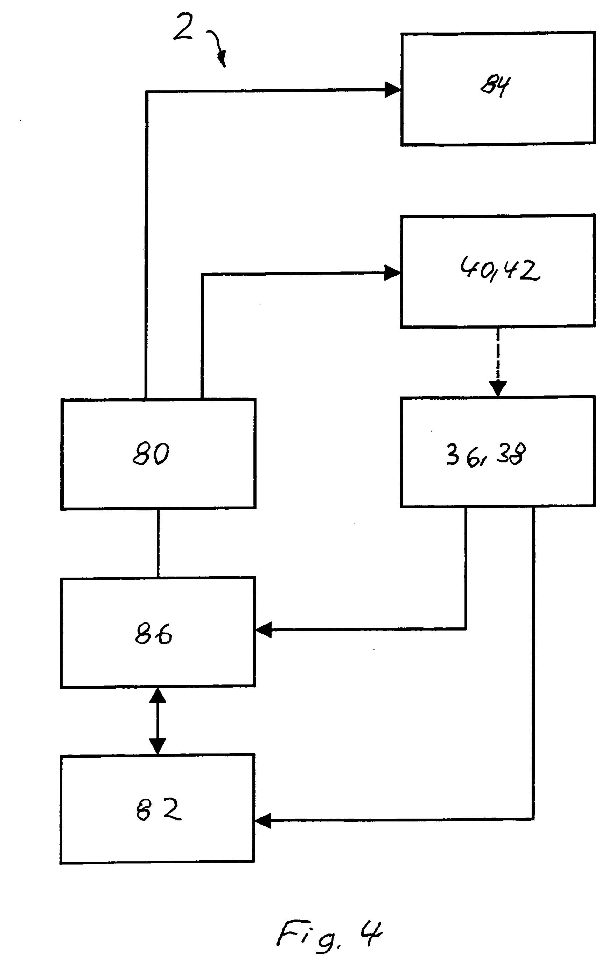

Fig. 4 zeigt blockschaltartig Komponenten der erfindungsgemäßen Messvorrichtung 2, die bei der Kalibrierung verwendet werden.

Die erfindungsgemäße Messvorrichtung 2 weist eine Steuerungseinrichtung 80 auf, die derart ausgebildet und eingerichtet ist, dass die Messvorrichtung 2 zwischen einem Messmodus, in dem ein Messvorgang ausführbar ist, und einem Kalibrierungsmodus, in dem ein Kalibrierungsvorgang ausführbar ist, umschaltbar ist. Die Steuerungseinrichtung 80 ist ferner dafür ausgebildet und eingerichtet, dass die Messvorrichtung in einem Kalibrierungsmodus kalibrierbar ist.

Während eines Messvorganges nimmt der Messtaster 36 fortlaufend Messwerte auf, die einer Auswertungseinrichtung 82 zugeführt werden, die anhand der Messwerte das Profil des Prüflings rekonstruiert. Die Rekonstruktion kann insbesondere mittels eines iterativen Verfahrens gemäß der DE 10 2009 032 353 A1 erfolgen. Die Rekonstruktion kann jedoch auch mittels einer Fourier-Analyse entsprechend EP 1 263 547 B1 erfolgen.

Um die Messvorrichtung 2 erfindungsgemäß zu kalibrieren, schaltet die Steuerungseinrichtung 80 die Messvorrichtung 2 aus dem Messmodus in den Kalibrierungsmodus. In dem Kalibrierungsmodus wird die Kalibrierung der Messvorrichtung 2 ausgeführt, und zwar bei dem dargestellten Ausführungsbeispiel unter Verwendung eines Flicknormales, wie dies weiter unten unter Bezugnahme auf Fig. 5 näher erläutert wird. In dem Kalibrierungsmodus wird zunächst das Flicknormal mittels einer geeigneten Spannvorrichtung eingespannt, der ein Drehantrieb 84 zugeordnet ist, so dass das Flicknormal relativ zu dem Messkopf 12drehbar ist.

Ferner steuert die Steuerungseinrichtung 80 die Einschwenkvorrichtung 40 derart an, dass der Messkopf 12 eingeschwenkt und das Messprisma 38 und der Messtaster 36 in Kontakt mit dem Flicknormal gebracht wird. Daran anschließend steuert die Steuerungseinrichtung 80 den Drehantrieb 84 des Flicknormales derart an, dass sich dieses relativ zu dem Messtaster 36 dreht.

Während der Drehung des Flicknormales relativ zu dem Messtaster 36 tastet derselbe das Flicknormal ab. Die hierbei gewonnenen Messwerte bilden Kalibrierungsdaten, anhand derer in weiter unten näher erläuterter Weise eine Kalibrierung der Messvorrichtung ausgeführt wird. Die Kalibrierungsdaten werden in einem Speicher 86 der Steuerungseinrichtung 80 abgelegt, der mit der Auswertungseinrichtung 82 in Datenübertragungsverbindung steht. Nach Gewinnung der Kalibrierungsdaten schaltet die Steuerungseinrichtung 82 die Messvorrichtung 2 zurück in den Messmodus. Hierzu wird die Ausschwenkvorrichtung 42 angesteuert, die daraufhin den Messkopf 12 aus der Messposition zurück in die Ruheposition bewegt. Außerdem wird der Drehantrieb 84 stillgesetzt, so dass das Flicknormal ausgespannt und zur Durchführung eines Messvorganges an einem Prüfling derselbe eingespannt werden kann.

Die der Auswertungseinrichtung 82 zur Verfügung stehenden Kalibrierungsdaten werden in dem nachfolgenden Messvorgang zur Kalibrierung der Messvorrichtung 2 berücksichtigt. Die Kalibrierung der Messvorrichtung 2 kann bedarfsweise und/oder nach einer vorbestimmten Anzahl von Messvorgängen und/oder nach einem vorbestimmten Betriebszeitraum der Messvorrichtung 2 vorgenommen werden.

Die Kalibrierung wird nachfolgend unter Bezugnahme auf Fig. 5 näher erläutert.

Fig. 5 stellt eine stark schematisierte Ansicht des Messprismas 38 zusammen mit einem Flicknormal 88 dar.

Bei dem Flicknormal 88 handelt es sich in dem Fachmann allgemein bekannter Weise um einen hinsichtlich der Kreisform seiner Kontur idealen Zylinder, der an einer Umfangsstelle 90 eine Abflachung mit einer vorgegebenen Ausdehnung (Tiefe) Pt aufweist. Fig. 5 dient zur Verdeutlichung der geometrischen Verhältnisse, die sich ergeben, wenn das Messprisma 38 an dem Flicknormal 88 anliegt, wobei die lineare Achse des Messtasters 36 in Fig. 5 mit dem Bezugszeichen 92 bezeichnet ist.

In Fig. 5 ist der Öffnungswinkel des Messprismas 38 $\alpha$ (erster Winkel) erkennbar. Ferner ist erkennbar, dass sich das Flicknormal 88 an zwei Kontaktpunkten 94, 96 in Kontakt mit dem Messprisma 38 befindet, während sich der Messtaster 36 an einem in Umfangsrichtung des Flicknormales 88 dazwischenliegenden Kontaktpunkt in Kontakt mit dem Flicknormal 88 befindet. Die Symmetrieachse des Messprismas 38 ist in Fig. 5 durch eine strichpunktierte Linie 100 symbolisiert und bildet für die nachfolgende Betrachtung die y-Achse eines rechtshändigen karthetischen Koordinatensystems. Die lineare Achse des Messtasters 36 verläuft unter einem Winkel β (zweiter Winkel) zur x-Achse dieses Koordinatensystems. Im Ergebnis ergeben sich in der in Fig. 5 dargestellten Konstellation damit drei Kontaktpunkte 94, 96, 98 zwischen dem Flicknormal 88 und der Messvorrichtung 2.

Die Bauteilkontur sei für die nachfolgende Betrachtung durch die Polarkoordinaten $\varphi$ und R ($\varphi$) im Bauteilkoordinatensystem beschrieben. Der Messtaster 36 erfasst den Abstand A ($\varphi$) in Abhängigkeit des Drehwinkels $\varphi$ des Bauteiles im Messprisma 38. Dementsprechend führen Rundheitsabweichungen zu einer charakteristischen Abstandsfunktion (Tasterauslenkung des Messtasters 36) A ($\varphi$). Mathematisch ergibt sich dann der folgende Zusammenhang zwischen der winkelabhängigen Bauteilkontur R ($\varphi$) und der Abstandsfunktion A ($\varphi$) :

(1.1)
$$A(\varphi) = \Psi(\alpha, \beta) \cdot R(\varphi + \frac{\alpha - \pi}{2}) + \Psi(\alpha, -\beta) \cdot R(\varphi - \frac{\alpha - \pi}{2}) - R(\varphi + \beta)$$

mit

$\alpha$      erster Winkel
$\beta$      zweiter Winkel
$\varphi$      Drehwinkel des Bauteils
R($\varphi$)     Radius des Bauteils (Bauteilkontur) in Abhängigkeit des Drehwinkels
A($\varphi$)     Abstandsfunktion

In dem Messmodus besteht das Ziel der in der Auswertungseinrichtung 82 durchgeführten Auswertung bzw. Rekonstruktion darin, die Bauteilkontur R ($\varphi$) aus der Abstandsfunktion A ($\varphi$) rechnerisch zu rekonstruieren. Den bekannten Rekonstruktionsverfahren ist gemeinsam, dass die Winkel $\alpha$ und $\beta$ für die Rekonstruktion bekannt sein müssen. Abweichungen der tatsächlichen Werte der Winkel $\alpha$ und $\beta$ von angenommenen Werten dieser Winkel führen zu Messungenauigkeiten, die durch die erfindungsgemäß vorgenommene Kalibrierung vermieden werden.

Hat das Flicknormal 88 in den Bereichen, in denen seine Kontur kreisförmig begrenzt ist, den Radius $R_0$, so ist der kleinste Bauteilradius $R_0$ - Pt und tritt bei dem Winkel $\varphi_0$ auf. Hierbei wird vorausgesetzt, dass die Abflachung des Flicknormales immer nur einen Kontaktpunkt mit der Messvorrichtung 2 hat, was sich jedoch durch entsprechende Dimensionierung der Abflachung 90 ohne weiteres gewährleisten lässt.

Wird das Flicknormal um 360° gedreht, so ergibt sich der in Fig. 6 dargestellte Funktionsverlauf. Die Transformationsvorschrift nach Gleichung (1.1) gewährleistet, dass die Peaks in Fig. 6 die gleiche Gestalt, allerdings unterschiedliche Amplituden aufweisen. Die unbekannten Winkel können beispielsweise ermittelt werden, indem die lokalen Extrema identifiziert werden oder eine integrale Auswertung der Abstandsfunktion mithilfe der Fourier-Transformation ausgeführt wird.

Mithilfe der Fourier-Transformation kann eine integrale Auswertung der Abstandsfunktion wie folgt vorgenommen werden:

In der zuvor beschriebenen Weise wird eine Messung unter Verwendung des Flicknormales durchgeführt. Ergebnis dieser Messfunktion ist die Abstandsfunktion A($\varphi$). Hiervon ausgehend kann der Median der Abstandsfunktion ermittelt und eine aperiodische Funktion $\Delta A(\varphi)$ ermittelt werden, die sich mathematisch in drei Teilfunktionen zerlegen lässt, wobei jede Teilfunktion den Verlauf der Relativbewegung für jeweils einen Kontaktpunkt beschreibt.

Die drei Teilfunktionen können dann einer Fourier-Transformation unterzogen werden. Es ergeben sich dann drei Fouriertransformierte der Teilfunktionen. Hiervon ausgehend können Einflüsse der Gestaltabweichung $\Delta R(\varphi)$ und des Winkels $\varphi_0$, bei dem die Messung beginnt, eliminiert werden, indem die Fourier-Transformierten der beiden Abstandsfunktionen, die den rechtsseitigen Prismenkontakt und den linksseitigen Prismenkontakt beschreiben, mit der komplex konjugierten Fouriertransformierten derjenigen Abstandsfunktion multipliziert wird, die den Kontakt mit dem Taster beschreibt. Das Ergebnis sind linearphasige Funktionen, deren Phasenterme ausschließlich die unbekannten Winkel $\alpha$ und $\beta$ enthalten. Die Phasenterme ergeben im Phasenspektrum jeweils eine Gerade, die durch den Ursprung verläuft. Die unbekannten Geradensteigungen können durch eine Ausgleichsgerade berechnet werden, die ebenfalls durch den Ursprung verläuft. Hieraus werden die unbekannten Winkel $\alpha$ und $\beta$ ermittelt.

Die dadurch ermittelten tatsächlichen Werte des ersten Winkels $\alpha$ und des zweiten winkels $\beta$ können dann bei der Rekonstruktion der Bauteilkontur entsprechend der obigen Gleichung (1.1) berücksichtigt werden, so dass die Messvorrichtung 2 damit kalibriert ist.

Messfehler, die auf einer Abweichung der tatsächlichen geometrischen Verhältnisse der Messvorrichtung 2 von angenommenen geometrischen Verhältnissen beruhen, sind damit im Vergleich zum Stand der Technik zuverlässig vermieden. Die Erfindung bietet damit im Vergleich zu Messvorrichtungen aus dem Stand der Technik eine mit einem relativ geringen Aufwand verbesserte Messgenauigkeit.

In den Figuren der Zeichnung sind gleiche bzw. sich entsprechende Bauteile mit den gleichen Bezugszeichen versehen. Die Figuren 2A bis 2E zeigen eine konstruktiv leicht abgewandelte Variante des Ausführungsbeispieles gemäß Fig. 1 und Fig. 3, die hinsichtlich des erfindungsgemäßen Grundprinzipes jedoch mit dem Ausführungsbeispiel gemäß Fig. 1 und Fig. 3 übereinstimmt.

## Patentansprüche

1. Messvorrichtung (2) zur Inprozess-Messung an Prüflingen während eines Bearbeitungsvorganges an einer Bearbeitungsmaschine, insbesondere einer Schleifmaschine,
mit einem Grundkörper (18),
mit einem Messkopf (12), der zwischen einer Ruheposition und einer Messposition bewegbar ist und mit dem Grundkörper (18) über ein Gestänge (14) verbunden ist, das derart ausgebildet und eingerichtet ist, dass der Messkopf (12) in Messposition Orbitaldrehungen des Prüflings um eine Drehachse folgt,
wobei der Messkopf (12) einen entlang einer linearen Achse (92) auslenkbaren Messtaster (36) zur Aufnahme von Messwerten während eines Messvorganges aufweist und
mit einer Steuerungseinrichtung (80) zur Steuerung des Messvorganges,
wobei die Messvorrichtung (2) in einem Kalibrierungsmodus kalibrierbar ist,
**dadurch gekennzeichnet,**
**dass** der Messkopf (12) ein Messprisma (38) mit einem ersten Winkel, dem Öffnungswinkel ($\alpha$) und einer Symmetrieachse (100) aufweist, dass die Ausrichtung der linearen Achse (92) des Messtasters (36) relativ zur Symmetrieachse des Messprismas durch einen zweiten Winkel ($\beta$) gegeben ist und dass die Steuerungseinrichtung (80) derart ausgebildet und eingerichtet ist, dass die Kalibrierung hinsichtlich des ersten Winkels ($\alpha$) und/oder des zweiten Winkels ($\beta$) erfolgt.

2. Messvorrichtung nach Anspruch 1, **dadurch gekennzeichnet, dass** die Steuerungseinrichtung (80) für eine Umschaltung der Messvorrichtung (2) zwischen einem Messmodus, in dem ein Messvorgang ausführbar ist, und einem Kalibrierungsmodus, in dem ein Kalibrierungsvorgang ausführbar ist, ausgebildet und eingerichtet ist.

3. Messvorrichtung nach einem der vorhergehenden Ansprüche, **dadurch gekennzeichnet, dass** die Steuerungseinrichtung (80) einen Speicher (86) aufweist, in dem während eines Kalibrierungsvorganges gewonnene Kalibrierungsdaten speicherbar sind, wobei der Speicher (86) mit einer Auswertungseinrichtung (82) in Datenübertragungsverbindung steht oder bringbar ist zur Berücksichtigung der Kalibrierungsdaten bei der Auswertung von während eines Messvorganges gewonnenen Messdaten.

4. Messvorrichtung nach einem der vorhergehenden Ansprüche, **dadurch gekennzeichnet, dass** die Kalibrierung unter Verwendung eines Rundheitsnormales erfolgt.

5. Messvorrichtung nach einem der vorhergehenden Ansprüche, **dadurch gekennzeichnet, dass** die Kalibrierung unter Verwendung eines Zylinders erfolgt, der in Umfangsrichtung an wenigstens einer Stelle eine Abflachung mit vorgegebener Ausdehnung aufweist.

6. Messvorrichtung nach einem der vorhergehenden Ansprüche, **dadurch gekennzeichnet, dass** die Kalibrierung unter Verwendung eines Flicknormales (88) erfolgt.

7. Verfahren zum Betreiben einer zur Inprozess-Messung an Prüflingen während eines Bearbeitungsvorganges an einer Bearbeitungsmaschine, insbesondere einer Schleifmaschine, vorgesehenen Messvorrichtung (2), wobei die Messvorrichtung Folgendes aufweist:

   - einen Grundkörper (18),
   - einen Messkopf (12), der zwischen einer Ruheposition und einer Messposition bewegbar ist und mit dem Grundkörper (18) über ein Gestänge (14) verbunden ist, das derart ausgebildet und eingerichtet ist, dass der Messkopf (12) in Messposition Orbitaldrehungen des Prüflings um eine Drehachse folgt, wobei der Messkopf (12) einen entlang einer linearen Achse (92) auslenkbaren Messtaster zur Aufnahme von Messwerten während eines Messvorganges aufweist und

- eine Steuerungseinrichtung (80) zur Steuerung des Messvorganges,

**dadurch gekennzeichnet, dass** die Messvorrichtung mittels der Steuerungseinrichtung (80) in einen Kalibrierungsmodus versetzt und kalibriert wird, dass ein Messkopf (12) mit einem Messprisma (38) mit einem ersten Winkel, dem Ööffnungswinkel ($\alpha$) und einer Symmetrieachse (100) verwendet wird, wobei die Ausrichtung der linearen Achse (92) des Messtasters (36) relativ zur Symmetrieachse (100) des Messprismas (38) durch einen zweiten Winkel ($\beta$) gegeben ist, wobei die Kalibrierung hinsichtlich des ersten Winkels ($\alpha$) und/oder des zweiten Winkels ($\beta$) ausgeführt wird.

8. Verfahren nach Anspruch 7, **dadurch gekennzeichnet, dass** die Messvorrichtung durch die Steuerungseinrichtung (80) aus einem Messmodus, in dem ein Messvorgang durchgeführt wird, in einen Kalibrierungsmodus, in dem ein Kalibrierungsvorgang ausgeführt wird, geschaltet wird.

9. Verfahren nach Anspruch 7 oder 8, **dadurch gekennzeichnet, dass** während eines Kalibrierungsvorganges gewonnene Kalibrierungsdaten in einem Speicher (86) der Steuerungseinrichtung (80) gespeichert werden, wobei der Speicher mit einer Auswertungseinrichtung (82) in Datenübertragungsverbindung steht und wobei die Kalibrierungsdaten bei der Auswertung von während eines Messvorganges gewonnenen Messdaten verwendet werden.

10. Verfahren nach einem der Ansprüche 7 bis 9, **dadurch gekennzeichnet, dass** bei der Kalibrierung der Messvorrichtung eine Rundheitsnormale verwendet wird.

11. Verfahren nach einem der Ansprüche 7 bis 10, **dadurch gekennzeichnet, dass** bei der Kalibrierung der Messvorrichtung ein Zylinder verwendet wird, der in Umfangsrichtung an wenigstens einer Stelle eine Abflachung mit vorgegebener Ausdehnung aufweist.

12. Verfahren nach einem der Ansprüche 7 bis 11, **dadurch gekennzeichnet, dass** bei der Kalibrierung der Messvorrichtung ein Flicknormal (88) verwendet wird.

## Claims

1. Measuring device (2) for the in-process measurement of test pieces during a machining operation on a machine tool, in particular a grinding machine, comprising a base body (18),
a measuring head (12) which can be moved between a neutral position and a measuring position and which is connected to the base body (18) via a rod assembly (14), which is configured and set up in such a way that the measuring head (12) in the measuring position follows orbital rotations of the test piece about a rotational axis,
the measuring head (12) comprising a measuring sensor (36) movable along a linear axis (92) for recording measurement values during a measuring operation and comprising a control apparatus (80) for controlling the measuring operation,
the measuring device (2) being able to be calibrated in a calibration mode,
**characterised in that**
the measuring head (12) includes a measuring prism (38) having first angle, the opening angle ($\alpha$) and an axis of symmetry (100), **in that** the orientation of the linear axis (92) of the measuring sensor (36) relative to an axis of symmetry of the measuring prism is defined by a second angle ($\beta$) and **in that** the control apparatus (80) is configured and set up such that the calibration is carried out with respect to the first angle ($\alpha$) and/or the second angle ($\beta$).

2. Measuring device according to claim 1, **characterised in that** the control apparatus (80) is configured and set up for switching the measuring device (2) between a measuring mode, in which a measuring operation can be performed, and a calibrating mode, in which a calibrating process can be performed.

3. Measuring device according to any one of the preceding claims, **characterised in that** the control apparatus (80) has a memory (86) in which calibration data obtained during a calibration process can be stored, the memory (86) being in data transmission connection with an evaluation apparatus (82) or being able to be moved into connection with the latter to take into account the calibration data during the evaluation of measured data obtained during a measuring operation.

4. Measuring device according to any one of the preceding claims, **characterised in that** the calibration is carried out using a roundness standard.

5. Measuring device according any one of the preceding claims, **characterised in that** the calibration is carried out using a cylinder which in the peripheral direction has a flattened portion with a predefined extension in at least one location.

6. Measuring device according to any one of the preceding claims, **characterised in that** the calibration is carried out using a Flick standard (88).

7. Method for operating a measuring device (2) provided for the in-process measurement of test pieces during a machining operation on a machine tool, in particular a grinding machine, the measuring device comprising the following:

   - a base body (18),
   - a measuring head (12) which can be moved between a neutral position and a measuring position and which is connected to the base body (18) via a rod assembly (14), which is configured and set up in such a way that the measuring head (12) in the measuring position follows orbital rotations of the test piece about a rotational axis, the measuring head (12) comprising a measuring sensor movable along a linear axis (92) for recording measurement values during a measuring operation and
   - a control apparatus (80) for controlling the measuring operation,
   **characterised in that** the measuring device is set in a calibration mode and calibrated by means of the control apparatus (80), **in that** a measuring head (12) having a measuring prism (38) with an first angle, the opening angle ($\alpha$), and an axis of symmetry (100) is used, the orientation of the linear axis (92) of the measuring sensor (36) relative to the axis of symmetry (100) of the measuring prism (38) being defined by a second angle ($\beta$), the calibration being carried out with respect to the first angle ($\alpha$) and/or the second angle ($\beta$).

8. Method according to claim 7, **characterised in that** the measuring device is switched by the control apparatus (80) from a measuring mode, in which a measuring operation is performed, into a calibration mode, in which a calibrating process is performed.

9. Method according to either of claims 7 or 8, **characterised in that** calibration data obtained during a calibrating process are saved in a memory (86) of the control apparatus (80), wherein the memory is in data transfer connection with an evaluation device (82) and the calibration data are used for the evaluation of measurement data obtained during a measuring operation.

10. Method according to any one of claims 7 to 9, **characterised in that** a roundness standard is used for the calibration of the measuring device.

11. Method according to any one of claims 7 to 10, **characterised in that** a cylinder is used for the calibration of the measuring device, which cylinder in peripheral direction has a flattened portion with a predefined extension in at least one location.

12. Method according to any one of claims 7 to 11, **characterised in that** a Flick standard (88) is used for the calibration of the measuring device.

**Revendications**

1. Dispositif de mesure (2) pour une mesure en cours de processus sur des éprouvettes pendant un usinage sur une machine d'usinage, en particulier une machine de meulage,
comportant un corps de base (18),
comportant une tête de mesure (12) qui est mobile entre une position de repos et une position de mesure et est reliée au corps de base (18) par l'intermédiaire d'un ensemble de tiges (14), qui est réalisé et configuré de telle sorte que la tête de mesure (12) en position de mesure suit les rotations orbitales de l'éprouvette autour d'un axe de rotation,
la tête de mesure (12) comportant un palpeur de mesure (36) pouvant être déplacé le long d'un axe linéaire (92) et destiné à recevoir des valeurs de mesure pendant un processus de mesure, et
comportant un dispositif de commande (80) pour la commande du processus de mesure,
ledit dispositif de mesure (2) pouvant être calibré dans un mode de calibrage,
**caractérisé en ce que**

la tête de mesure (12) comporte un prisme de mesure (38) avec un premier angle, à savoir l'angle d'ouverture ($\alpha$), et un axe de symétrie (100), **en ce que** l'orientation de l'axe linéaire (92) du palpeur de mesure (36) par rapport à l'axe de symétrie du prisme de mesure est définie par un deuxième angle (ß), et **en ce que** le dispositif de commande (80) est réalisé et configuré de telle sorte que le calibrage est effectué par rapport au premier angle ($\alpha$) et/ou au deuxième angle (ß).

2. Dispositif de mesure selon la revendication 1, **caractérisé en ce que** le dispositif de commande (80) est réalisé et configuré pour commuter le dispositif de mesure (2) entre un mode de mesure, dans lequel est effectué le processus de mesure, et un mode de calibrage, dans lequel est effectué un processus de calibrage.

3. Dispositif de mesure selon l'une quelconque des revendications précédentes, **caractérisé en ce que** le dispositif de commande (80) comporte une mémoire (86), dans laquelle peuvent être stockées les données de calibrage obtenues pendant un processus de calibrage, ladite mémoire (86) étant ou pouvant être amenée en liaison de transmission de données avec un dispositif d'analyse (82), afin de tenir compte des données de calibrage au cours de l'analyse des données de mesure obtenues pendant un processus de mesure.

4. Dispositif de mesure selon l'une quelconque des revendications précédentes, **caractérisé en ce que** le calibrage est effectué moyennant l'utilisation d'un étalon de rondeur.

5. Dispositif de mesure selon l'une quelconque des revendications précédentes, **caractérisé en ce que** le calibrage est effectué moyennant l'utilisation d'un cylindre qui comporte, en au moins un emplacement dans le sens circonférentiel, un méplat avec une dimension prédéfinie.

6. Dispositif de mesure selon l'une quelconque des revendications précédentes, **caractérisé en ce que** le calibrage est effectué moyennant l'utilisation d'un cylindre de précision à méplats (88).

7. Procédé pour le fonctionnement d'un dispositif de mesure (2) prévu pour une mesure en cours de processus sur des éprouvettes pendant un usinage sur une machine d'usinage, en particulier une machine de meulage, ledit dispositif de mesure comportant les éléments suivants :

   - un corps de base (18),
   - une tête de mesure (12) qui est mobile entre une position de repos et une position de mesure et est reliée au corps de base (18) par l'intermédiaire d'un ensemble de tiges (14), qui est réalisé et configuré de telle sorte que la tête de mesure (12) en position de mesure suit les rotations orbitales de l'éprouvette autour d'un axe de rotation, la tête de mesure (12) comportant un palpeur de mesure pouvant être déplacé le long d'un axe linéaire (92) et destiné à recevoir des valeurs de mesure pendant un processus de mesure, et
   - un dispositif de commande (80) pour la commande du processus de mesure,
   **caractérisé en ce que** le dispositif de mesure peut être amené en mode de calibrage au moyen du dispositif de commande (80) et être calibré, **en ce que** la tête de mesure (12) est utilisée avec un prisme de mesure (38) avec un premier angle, à savoir l'angle d'ouverture ($\alpha$), et un axe de symétrie (100), l'orientation de l'axe linéaire (92) du palpeur de mesure (36) par rapport à l'axe de symétrie (100) du prisme de mesure (38) étant définie par un deuxième angle (ß), le calibrage étant effectué par rapport au premier angle ($\alpha$) et/ou au deuxième angle (ß).

8. Procédé selon la revendication 7, **caractérisé en ce que** le dispositif de mesure est commuté par le dispositif de commande (80) à partir d'un mode de mesure, dans lequel est effectué un processus de mesure, vers un mode de calibrage, dans lequel est effectué un processus de calibrage.

9. Procédé selon la revendication 7 ou 8, **caractérisé en ce que** les données de calibrage obtenues pendant un processus de calibrage sont stockées dans une mémoire (86) du dispositif de commande (80), ladite mémoire étant en liaison de transmission de données avec un dispositif d'analyse (82), et les données de calibrage étant utilisées au cours de l'analyse des données de mesure obtenues pendant un processus de mesure.

10. Procédé selon l'une quelconque des revendications 7 à 9, **caractérisé en ce qu'**un étalon de rondeur est utilisé pendant le calibrage du dispositif de mesure.

11. Procédé selon l'une quelconque des revendications 7 à 10, **caractérisé en ce qu'**un cylindre qui comporte, en au moins un emplacement dans le sens circonférentiel, un méplat avec une dimension prédéfinie, est utilisé pendant le calibrage du dispositif de mesure.

12. Procédé selon l'une quelconque des revendications 7 à 11, **caractérisé en ce qu'**un cylindre de précision à méplats (88) est utilisé pendant le calibrage du dispositif de mesure.

Fig. 1

Fig. 2A

Fig. 2B

Fig. 2C

Fig. 2D

Fig. 2E

Fig. 3

2

Fig. 4

Fig. 5

Fig. 6

**IN DER BESCHREIBUNG AUFGEFÜHRTE DOKUMENTE**

**In der Beschreibung aufgeführte Patentdokumente**

- EP 0859689 A
- DE 4412682 A1
- EP 1370391 A
- DE 102009042252 A1
- DE 2010013069 A1
- DE 10205512 A1
- DE 69521921 T2
- EP 0665481 B

- EP 0322120 A
- EP 1263547 B1
- DE 60101792 T2
- EP 1278613 B1
- WO 0166305 A
- DE 2009032353 A1
- DE 102009032353 A1